# EUROPEAN PATENT APPLICATION

(11) **EP 1 956 255 A1**
(43) Date of publication of application: **13.08.2008**
(21) Application number: 06823248.7
(22) Date of filing: 09.11.2006
(51) Int. Cl.: F16C 33/36, F16C 19/36, F16C 33/58

(54) **TAPERED ROLLER BEARING**

(30) Priority: 16.11.2005 JP 2005331545
(71) Applicant: NTN Corporation, Osaka-shi, Osaka 550-0003 (JP)
(72) Inventor: KAWASE, Tatsuo, Kuwana-shi Mie 511-0811 (JP); FUJIWARA, Hiroki, Kuwana-shi Mie 511-0811 (JP)
(74) Representative: Hirsch & Associés
(86) International application number: PCT/JP2006/322361
(87) International publication number: WO 2007/058112

(57) **Abstract**

In a face-to-face duplex tapered roller bearing assembly that is used in automobile differential gear units, various industrial machines and machine tools, a crowning shape effective to provide a uniform contact surface pressure even at the time of occurrence of a misalignment is employed to increase the life time of the bearing assembly. Two tapered roller bearing assemblies (1) are used in face-to-face relation to each other. Any one of the inner ring raceway surface (2a), outer ring raceway surface (3a) and roller rolling surfaces (4a) in the tapered roller bearing assembly (1) has a crowning, the shape of which is such that the amount of drop of the crowning in the inner and outer ring raceway surfaces (2a) and (3a) and the roller rolling surfaces (4a) on the reduced diameter side of each roller (4) is smaller than that on the large diameter side of each roller (4).

## Description

### FIELD OF THE INVENTION

The present invention relates generally to a tapered roller bearing assembly which may be used in various industrial machines such as, for example, automobile differential gear unit, construction machines and machine tools and, more particularly, to a crowning shape of raceway surfaces of the bearing rings or roller rolling surfaces employed in a tapered roller bearing assembly.

### BACKGROUND ART

In order to increase the rolling fatigue life of a tapered roller bearing assembly, it is necessary to minimize the contact surface pressure between a raceway surface in each of inner and outer rings and rolling surface of rollers. To minimize the contact surface pressure under a predetermined loaded condition, the pattern of distribution of surface pressure in an axial direction must be uniform and, as a method to achieve this, a crowning process has been known, in which the raceway surface in the inner ring or the outer ring, or the rolling surface of each roller is formed as a curved surface.

So far as the crowning is concerned, various suggestions have hitherto been made, representative examples of which are disclosed in, for example, Patent Documents 1 to 10. Of them, Patent Document 3 discloses the invention, in which in a double row roller bearing assembly for use in railway vehicles, stress distribution is uniformized by increasing the crowning of a contact area between the rollers and the inner and outer rings, on one side adjacent an intermediate point of the bearing assembly to a value larger than that on the other side adjacent one end of the bearing assembly, or by increasing the amount of drop, resulting from the crowning, on a reduced diameter side of the rollers to a value larger than that on a large diameter side of the rollers, and is applied to a tapered roller bearing of a kind that is used in back-to-back duplex fashion.
Patent Document 1: JP Utility Model Registration No. 02554884 (Japanese Laid-open Utility Model Publication No. 05-22845)
Patent Document 2: JP Laid-open Utility Publication No. 05-89943
Patent Document 3: JP Laid-open Patent Publication No. 08-232960
Patent Document 4: JP Laid-open Patent Publication No. 2000-257637
Patent Document 5: JP Laid-open Patent Publication No. 2000-346078
Patent Document 6: JP Laid-open Patent Publication No. 2001-65574 (US 6,390,685 B1)
Patent Document 7: JP Laid-open Patent Publication No. 2001-82114 (US 6,311,660 B1)
Patent Document 8: JP Laid-open Patent Publication No. 2001-124089
Patent Document 9: JP Laid-open Patent Publication No. 2001-241446
Patent Document 10: JP Laid-open Patent Publication No. 2002-235749

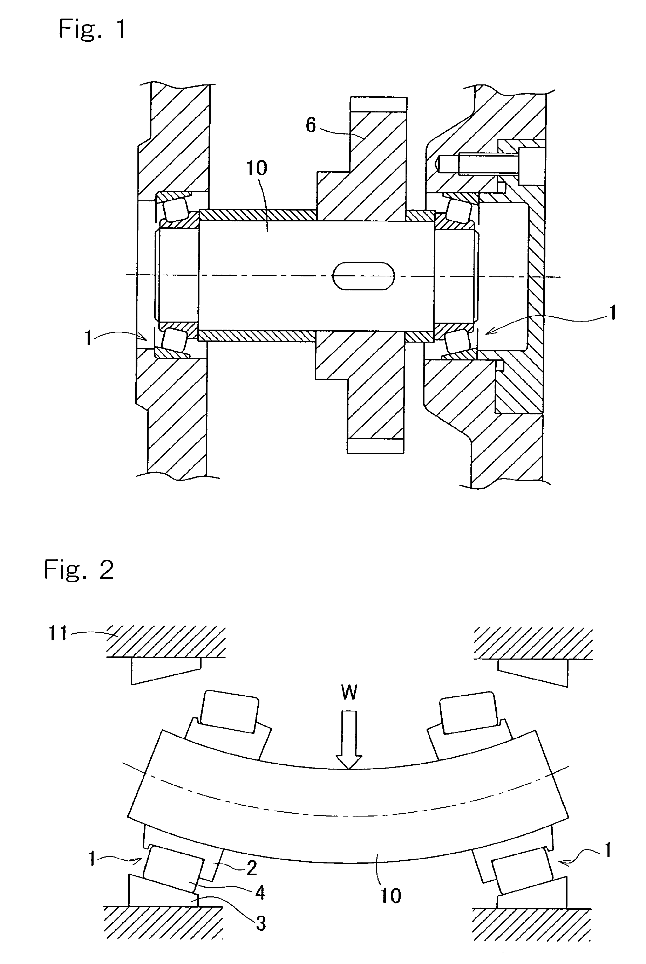

While the double row roller bearing assembly for the railway vehicles is employed in back-to-back duplex fashion, it is quite often that in the support bearing assembly employed in automobile differential gear units, any other industrial machines, construction machines or machine tools, two tapered roller bearing assemblies 1 are arranged in face-to-face duplex fashion in order to support a shaft 10 as shown in Fig. 1.

In the tapered roller bearing assembly, it has been generally observed that by the effect of a force acting on rollers from a collar portion of the inner ring, a moment with which the rollers press the raceway surface in the inner ring tends to be generated at a large diameter side of each roller and, by the action of this moment, the stress increases at a contact area on the large diameter side of each roller, accompanied by the phenomenon in which the rolling fatigue life tends to be reduced. In particular, in order to increase the life time, it is necessary to perform the crowning process so that without accompanying edge stresses in the contact area between the rollers and the bearing ring, the contact surface pressure can be uniformly distributed to increase the fatigue life.

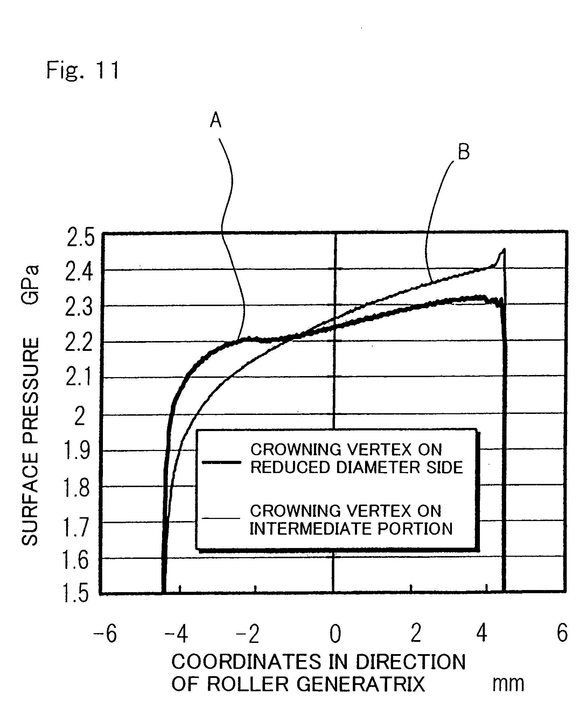

Also, in a unit in which the tapered roller bearing assemblies are used in face-to-face duplex fashion, it often occurs that by the effect of a radial load W brought about from a gear 6 (Fig. 1) or the like mounted on the shaft 10, the shaft 10 tends to undergo deflection and a housing 11 tends to undergo deformation as shown in Fig. 2. In such case, respective center lines of the inner and outer rings 2 and 3 of the tapered roller bearing assemblies 1 fail to assume a parallel relation to each other or are inclined to pose respective angles of inclination. Such a deformation of the bearing assemblies is referred to as a misalignment. Once the misalignment occurs, a biased load acts on the contact area between the raceway surface in each of the inner ring 2 and the outer ring 3 and the rolling surface of each of the rollers 4, resulting in unevenness of the distribution of contact surface pressure as shown by a curve B in Fig. 11. If the distribution of the contact surface pressure is uneven, the maximum contact surface pressure may increase, accompanied by lowering of the fatigue life of the bearing assembly. In particular, where in the automobile differential gear unit or any other industrial machines, construction machines or machine tools, the tapered roller bearing assembly 1 is used in face-to-face duplex fashion, in which two tapered rollers are mounted in face-to-face relation with each other, the amount of interference between each of the inner ring 2 and the outer ring 3 and each of the rollers 4 tends to increase on the large diameter side of each roller 4 and, therefore, the contact surface pressure may increase on the large diameter side of each roller 4.

Against such a misalignment resulting from deflection of the shaft and/or deformation of the housing, it is necessary to apply the crowning process so that a uniform distribution of contact surface pressure can be secured.

### DISCLOSURE OF THE INVENTION

An object of the present invention is to provide a face-to-face duplex tapered roller bearing assembly, which employs a crowning shape effective to provide a uniform distribution of contract surface pressure even in the occurrence of a misalignment to thereby increase the life time of the bearing assembly.

The tapered roller bearing assembly of the present invention is a face-to-face duplex tapered roller bearing assembly, which assembly includes an inner ring having a raceway surface defined therein, an outer ring having a raceway surface defined therein and a plurality of tapered rollers each having a rolling surface. One of the inner ring raceway surface, the outer ring raceway surface and each of the roller rolling surfaces has a crowning, the shape of which is such that the amount of drop of the crowning of the inner ring raceway surface, the outer ring raceway surface or each of the roller rolling surfaces on the reduced diameter side of each roller is smaller than that of the crowning on the large diameter side of each roller.

With the above described construction employed for the present invention, the previously described amount of interference does not increase on the large diameter side of each roller and, in the event of occurrence of the misalignment, the contact surface pressure can be distributed substantially uniformly to thereby increase the fatigue life.

In the present invention, the vertex of the crowning preferably lies on a small collar side in the case of the inner ring raceway surface, on the reduced diameter side of each roller in the case of the outer ring raceway surface and on the reduced diameter side of each roller in the case of each roller rolling surface.

With the above described construction employed for the present invention, an increase of the amount of interference on the large diameter side of each roller can be further effectively avoided, allowing the fatigue life to be increased.

Also, in the present invention, the inner ring raceway surface, the outer ring raceway surface or each roller rolling surface, which is formed with the crowning, has a center portion formed as a straight line with its opposite ends having a respective crowning. The shape of the crowning at each end is such that the amount of drop of the crowning on the small collar side in the case of the inner ring raceway surface, the amount of drop of the crowning on the reduced diameter side of each roller in the case of the outer ring raceway surface or the amount of drop of the crowning on the reduced diameter side of each roller in the case of each roller rolling surface is smaller than the amount of drop of the crowning on the large diameter side of each roller.

Even in the case of this construction, in a manner similar to that described hereinabove, the previously described amount of interference does not increase on the large diameter side of each roller and, in the event of occurrence of the misalignment, the surface contact pressure can be distributed substantially uniformly to thereby increase the fatigue life.

The shape of the crowning may be an arcuate shape having a single radius of curvature, an continuous arcuate shape formed having a plurality of arcs, a shape expressed by a logarithmic curve or a shape that can be expressed with a general function. A proper crowning shape can be selected to suit the status of use and/or processing conveniences of the bearing assembly.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal sectional view showing a standard bearing device in which tapered roller bearing assemblies are utilized in face-to-face relation to each other;
Fig. 2 is a schematic diagram showing the occurrence of a misalignment;
Fig. 3 is a longitudinal sectional view showing a tapered roller bearing assembly according to a first preferred embodiment of the present invention with a portion thereof removed;
Fig. 4 is a diagram showing the shape of a crowning in the bearing assembly;
Fig. 5 is a diagram showing the shape of a different crowning;
Fig. 6 is a diagram showing the shape of a further different crowning;
Fig. 7 is a diagram showing the shape of a still further different crowning;
Fig. 8 is a longitudinal sectional view showing the tapered roller bearing assembly according to a second preferred embodiment of the present invention with a portion thereof removed;
Fig. 9 is a diagram showing the shape of the crowning in the bearing assembly;
Fig. 10 is a diagram showing the shape of a different crowning in the bearing assembly; and
Fig. 11 is a chart showing a pattern of distribution of contact surface pressure.

### BEST MODE FOR CARRYING OUT THE INVENTION

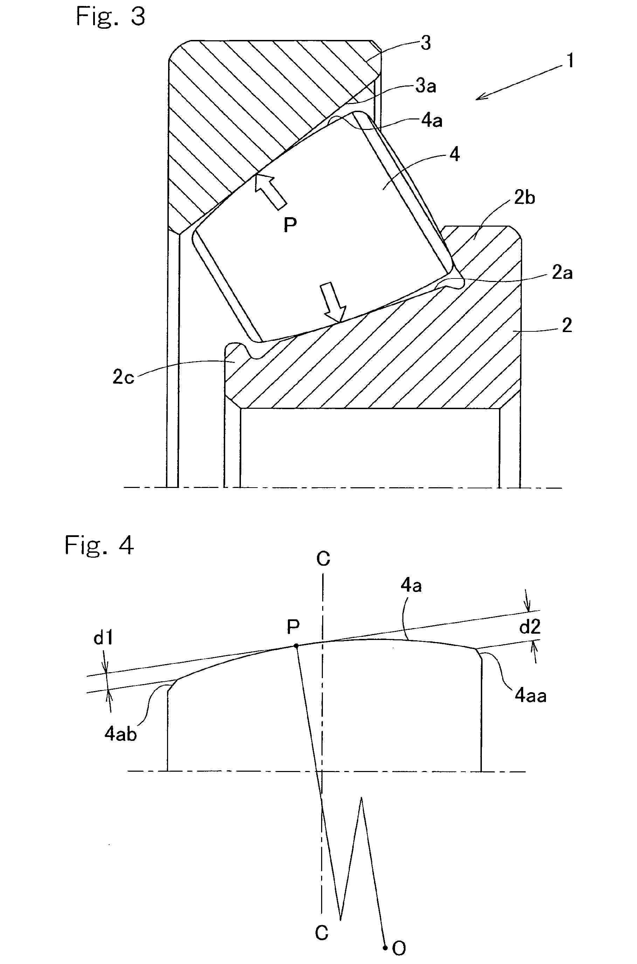

A first preferred embodiment of the present invention will now be described with particular reference to Figs. 3 to 5. Referring to Fig. 3, a tapered roller bearing assembly 1 includes an inner ring 2, an outer ring 3, and a plurality of tapered rollers 4 interposed between the inner and outer rings 2 and 3. The inner ring 2 has an outer periphery having defined therein a raceway surface 2a comprised of a conical surface, and also has a large collar 2b on a large diameter side of the raceway surface 2a and a small collar 2c on a reduced diameter side of the raceway surface 2a. The outer ring 3 has an inner periphery having defined therein a raceway surface 3a comprised of a conical surface so as to confront the raceway surface 2a in the inner ring 2 and, has no collar. Each of the tapered rollers 4 has an outer periphery formed as a rolling surface 4a and is rotatable between the raceway surfaces 2a and 3a. The tapered rollers 4 are accommodated within respective pockets of a roller retainer (not shown) and are retained spaced a predetermined distance from each other in a direction circumferentially thereof.

The rolling surface 4a of each of the tapered rollers 4 is so shaped as to have a crowning and, as shown in Fig. 4, opposite ends thereof are chamfered slantwise as shown by 4aa and 4ab. In the case of Figs. 3 and 4, there is shown a full crowning, the shape of which is an arcuate shape, in a longitudinal cross section, having a single radius of curvature with its center lying in alignment with a point O. A vertex P of the crowning, that is, a contact point with the raceway surfaces 2a and 3a in the inner and outer rings 2 and 3 lies on a reduced diameter side of an intermediate plane C-C with respect to the axis of rotation of each tapered roller 4, and the amount of drop d1 on the reduced diameter side is smaller than the amount of drop d2 on the large diameter side. Each of the amounts of drop d1 and d2 represents a distance measured from the tangential line extending in touch with the vertex P of the crowning to a corresponding one end of the crowning.

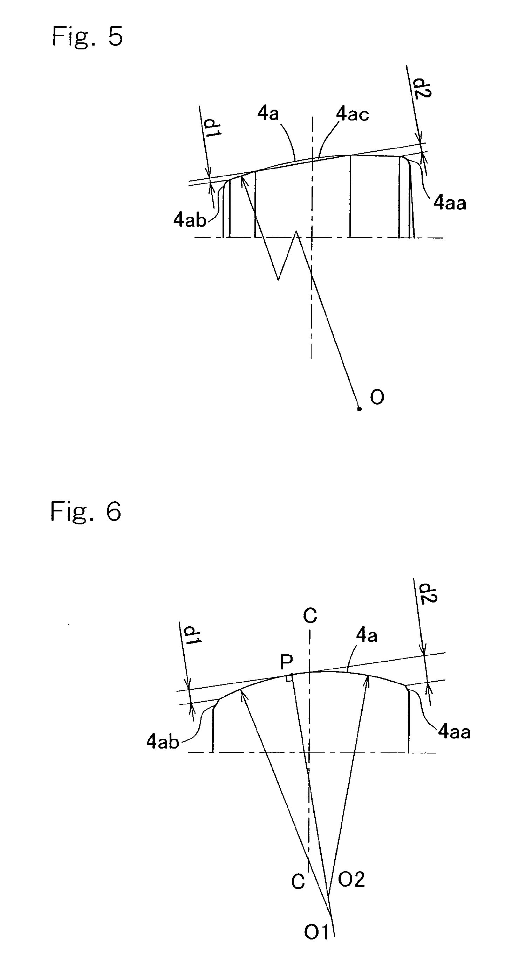

Fig. 5 illustrates an example in which unlike that shown in Figs. 3 and 4 the roller rolling surface 4a represents a non-full crowning with a straight portion 4ac defined in an intermediate portion thereof. In the case of this example, the opposite ends of the roller rolling surface 4a are defined by a circular arc having a single radius of curvature with its center lying in alignment with the point O, but that intermediate portion represents the straight portion 4ac with the circular arc consequently divided into two adjacent the opposite ends of the rolling surface 4a. The amount of drop of the crowning represents the distance measured from the imaginary line of extension of the straight portion 4ac to a corresponding end of the crowning, and the amount of drop d1 on the reduced diameter side is smaller than the amount of drop d2 on the large diameter side.

Where the shape of the crowning is such as shown in Figs. 3 and 4 or Fig. 5, bias of a load acting on a contact area between the raceway surfaces 2a and 3a of the inner and outer rings 2 and 3 and the rolling surface 4a of each of the rollers 4 at the time of occurrence of the misalignment can be minimized to uniformize a distribution of contact surface pressure. By way of example, the distribution of contact surface pressure developed at the time of occurrence of the misalignment is represented by a curve A in Fig. 11. When this is compared with the case (a curve B), in which the vertex of the crowning is positioned in alignment with the intermediate point in the axial direction of each tapered roller 4 and the respective amounts of drop of the crowning on the reduced diameter side and the large diameter side, respectively, are the same, the difference in magnitude of the maximum contact surface pressure will readily be understood. It is to be noted that the curve A in Fig. 11 represents the example, in which the contact surface pressures occurring when the vertex of the crowning lies on the small collar side in the case of the inner ring raceway surface, on the reduced diameter side in the case of the outer ring raceway surface and on the reduced diameter side of each roller rolling surface have been calculated.

As shown in Fig. 6, the shape of the crowning may be a continuous arcuate shape composed of a plurality of arcs. In this example, the shape is comprised of an arc having its center lying at the point O1 and an arc having its center lying at the point 02, and those arcs are smoothly continued to each other at the vertex P of the crowning. Even in this case, the vertex P of the crowning lies on the reduced diameter side with respect to the intermediate plane C-C perpendicular to the axis of rotation of each tapered roller 4 and the amount of drop d1 on the reduced diameter side is smaller than the amount of drop d2 on the large diameter side.

Also, other than the shape expressed by the arc, the shape of the crowning may be a shape that can be expressed by a logarithmic curve or any other conventional function.

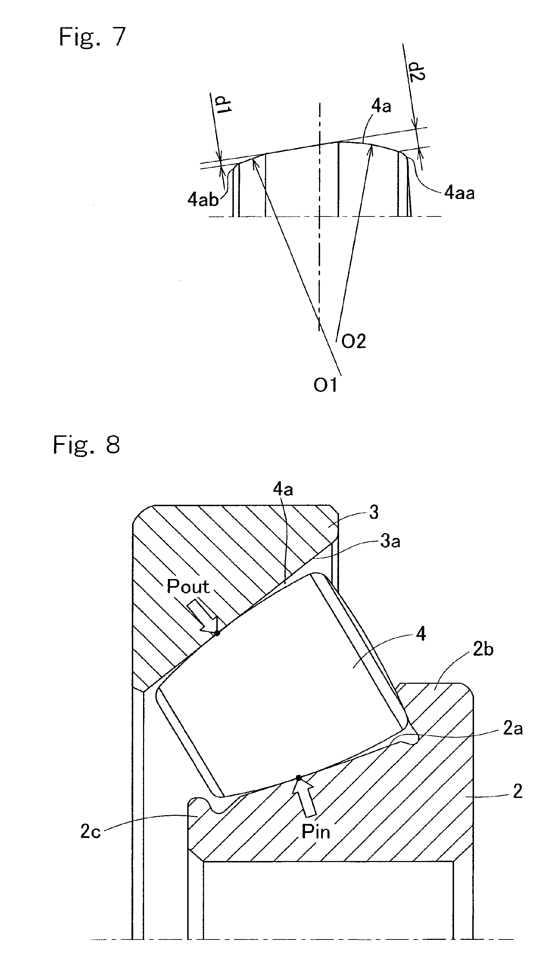

Also, as shown in Fig. 7, in each roller rolling surface 4a, an intermediate portion of such rolling surface 4a may be defined by a straight line with the crowning formed only at opposite ends of the rolling surface 4a by an arcs having respective center points different with each other. Even in this case, the amount of drop d1 on the reduced diameter side is smaller than the amount of drop d2 on the large diameter side.

In either case, it is possible to substantially uniformize the distribution of contact surface pressure at the time of occurrence of the misalignment.

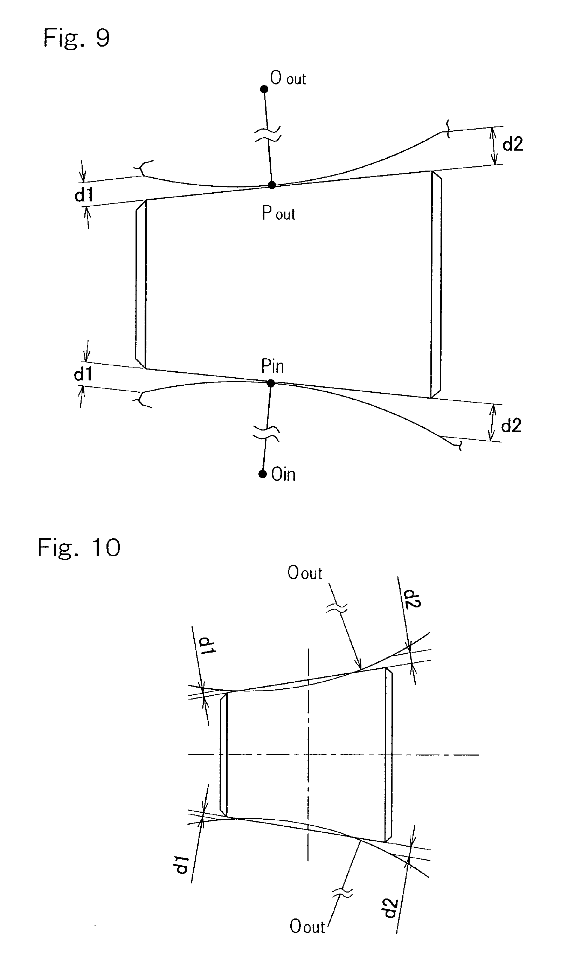

Figs. 8 to 10 illustrate a second preferred embodiment of the present invention. This embodiment is such that the crowning is applied to each of the respective raceway surfaces 2a and 3a of the inner and outer rings 2 and 3. The rolling surface 4a of each tapered roller 4 is represented by a conical surface. In the case of Figs. 8 and 9, the full crowning is applied to the raceway surfaces 2a and 3a of the inner and outer rings 2 and 3, and the crowning shapes of the inner and outer rings 2 and 3 are represented by an arc having a single radius of curvature with its center lying at the point Oin and the point Oout, respectively. Respective vertexes Pin and Pout of the crowning lie on the reduced diameter side of each tapered roller 4 with respect to the intermediate plane C-C perpendicular to the axis of rotation of each tapered roller 4 and, at the same time, both of the inner ring raceway surface 2a and the outer ring raceway surface 3a have the amount of drop d 1 on the reduced diameter side which is smaller than the amount of drop d2 on the large diameter side.

Also, as shown in Fig. 10, an intermediate portion of each of the inner ring 2 and the outer ring 3 may be formed as a straight portion with the crowning formed only at the opposite ends of each of inner and outer ring raceway surfaces 2a and 3a. Even in this case, the amount of drop d1 on the reduced diameter side which is smaller than the amount of drop d2 on the large diameter side.

In either case, functions and effects both similar to those afforded when the crowning is applied to the rolling surface 4a of each tapered roller 4 can be obtained.

Also, even in the raceway surfaces 2a and 3a of the inner ring 2 and the outer ring 3, the shape of the crowning employed therefor may be represented by a continuous arcuate shape comprised of a plurality of arcs, a shape expressed by a logarithmic curve or a shape expressed by a conventional function and, even in such case, functions and effects both similar to those described above can be obtained.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention.

Accordingly, such changes and modifications are, unless they depart from the scope of the present invention as delivered from the claims annexed hereto, to be construed as included therein.

## Claims

1. A face-to-face duplex tapered roller bearing assembly, which comprises
an inner ring having a raceway surface defined therein;
an outer ring having a raceway surface defined therein; and
a plurality of tapered rollers each having a rolling surface;
wherein one of the inner ring raceway surface, the outer ring raceway surface and each of the roller rolling surfaces has a crowning, the shape of which is such that the amount of drop of the crowning of the inner ring raceway surface, the outer ring raceway surface or each of the roller rolling surfaces on the reduced diameter side of each roller is smaller than that of the crowning on the large diameter side of each roller.

2. The tapered roller bearing assembly as claimed in Claim 1, wherein the crowning has a vertex which lies on a small collar side in the case of the inner ring raceway surface, on the reduced diameter side of each roller in the case of the outer ring raceway surface and on the reduced diameter side of each roller in the case of each roller rolling surface.

3. The tapered roller bearing assembly as claimed in Claim 1, wherein the inner ring raceway surface, the outer ring raceway surface or each roller rolling surface, which is formed with the crowning, has a center portion formed as a straight line with its opposite ends having a respective crowning and wherein the shape of the crowning at each end is such that the amount of drop of the crowning on the small collar side in the case of the inner ring raceway surface, the amount of drop of the crowning on the reduced diameter side of each roller in the case of the outer ring raceway surface or the amount of drop of the crowning on the reduced diameter side of each roller in the case of each roller rolling surface is smaller than the amount of drop of the crowning on the large diameter side of each roller.

4. The tapered roller bearing assembly as claimed in Claim 1, wherein the shape of the crowning is an arcuate shape having a single radius of curvature, an continuous arcuate shape formed having a plurality of arcs, a shape expressed by a logarithmic curve or a shape that can be expressed with a general function.
